Europäisches Patentamt

European Patent Office

Office européen des brevets

(19)

(11) EP 0 946 036 B1

(12) **FASCICULE DE BREVET EUROPEEN**

(45) Date de publication et mention
de la délivrance du brevet:
**27.04.2005 Bulletin 2005/17**

(51) Int Cl.⁷: **H04M 9/08**

(21) Numéro de dépôt: **99400523.9**

(22) Date de dépôt: **04.03.1999**

(54) **Détection d'activité vocale en présence d'une source parasite de signal sonore**

Sprachdetektion bei zusätzlicher Anwesenheit einer Rauschquelle

Vocal activity detection in the presence of parasitic source of sound

(84) Etats contractants désignés:
**DE ES GB IT**

(30) Priorité: **23.03.1998 FR 9803528**

(43) Date de publication de la demande:
**29.09.1999 Bulletin 1999/39**

(73) Titulaire: **ALCATEL**
**75008 Paris (FR)**

(72) Inventeurs:
• **Amand, Fabrice**
**92130 Issy les Moulineaux (FR)**

• **Bourmeyster, Ivan**
**75015 Paris (FR)**

(74) Mandataire: **Lamoureux, Bernard et al**
**COMPAGNIE FINANCIERE ALCATEL**
**Département Propriété Industrielle**
**54, rue La Boétie**
**75008 Paris (FR)**

(56) Documents cités:
**EP-A- 0 627 840        US-A- 5 668 871**

EP 0 946 036 B1

## Description

La présente invention concerne l'activation d'un dispositif de traitement de la parole pour un équipement de communication main-libre en présence d'un dispositif susceptible de générer un signal sonore perturbateur. Le document US 5 668 871 décrit un dispositif d'activation de traitement de la parole.

Un exemple typique et non restrictif d'équipement concerné par la présente invention est celui d'un téléphone mobile utilisé en main-libre dans un véhicule équipé d'un auto-radio, téléphone dans lequel le dispositif de traitement considéré est un dispositif de reconnaissance vocale. Dans un tel cas, le dispositif de reconnaissance vocale doit pouvoir distinguer un signal vocal du type commande vocale émise par l'utilisateur, d'un signal émis par le haut-parleur de l'autoradio, et ce, afin de n'activer le traitement propre à la reconnaissance vocale que sur réception d'une commande vocale.

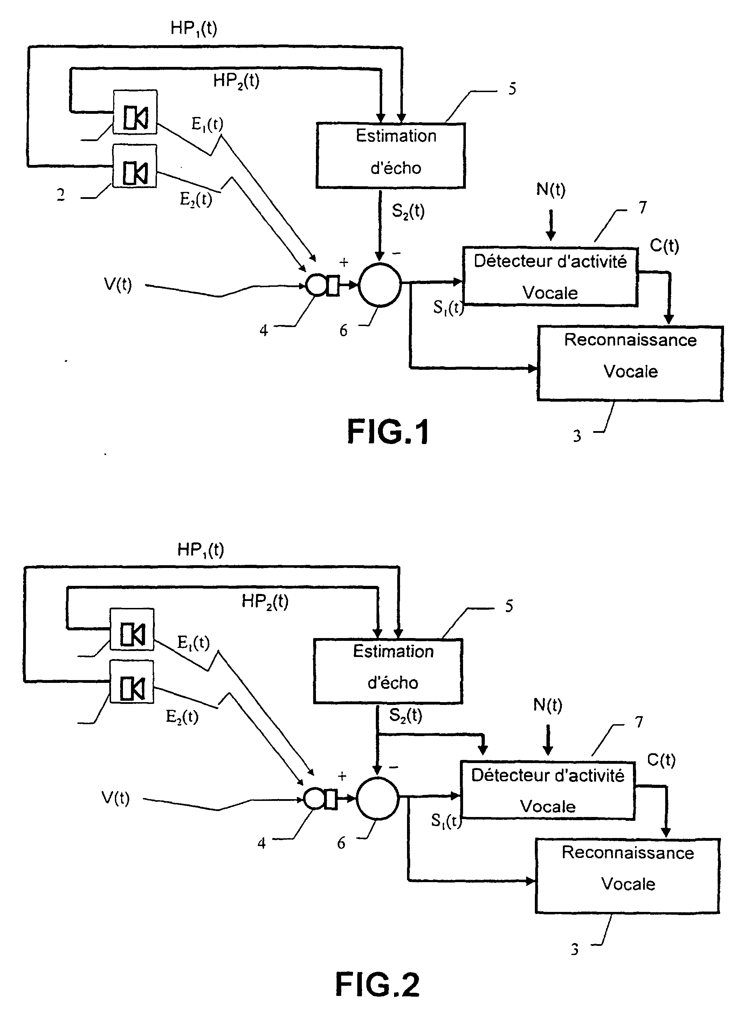

En référence à la figure 1, dans laquelle on a considéré, à titre d'exemple non limitatif, que l'autoradio comporte deux haut-parleurs 1 et 2, il est déjà connu, pour un équipement de communication main-libre muni d'un dispositif 3 de reconnaissance vocale et d'un microphone 4 recevant un signal vocal, de prévoir un dispositif annuleur d'écho comprenant un dispositif d'estimation d'écho 5 et des moyens de soustractions 6. Le dispositif d'estimation d'écho 5 reçoit les signaux de sortie $HP_1(t)$ et $HP_2(t)$ des haut-parleurs. Son rôle est d'établir, à partir des signaux $HP_1(t)$ et $HP_2(t)$ reçus, une estimation $\hat{E}_1(t)$, $\hat{E}_2(t)$ des signaux $E_1(t)$ et $E_2(t)$ reçus par le microphone 4 en provenance des haut-parleurs 1, 2. La somme $S_2(t)$ de ces estimations $\hat{E}_1(t)$ et $\hat{E}_2(t)$ est délivrée en sortie du dispositif d'estimation d'écho 5, en vue d'être soustraite, par les moyens de soustraction 6, au signal vocal reçu par le microphone 4 et résultant de la somme d'une commande vocale $V(t)$ émise le cas échéant par l'utilisateur, et des signaux $E_1(t)$ et $E_2(t)$ en provenance des haut-parleurs 1 et 2. Le signal $S_1(t)$ en sortie des moyens de soustraction 6 est destiné d'une part, au dispositif de reconnaissance vocale 3, et d'autre part, à des moyens 7 de détection d'activité vocale, qui génèrent, en cas de détection d'une commande vocale, un signal d'activation $C(t)$ du dispositif 3. Le dispositif de reconnaissance vocale 3 s'occupe alors d'extraire la commande vocale à partir du signal $S_1(t)$. Plus précisément, les moyens 7 de détection d'activité vocale calculent le rapport signal-à-bruit suivant :

$$\frac{S_1(t)}{N(t)}$$

dans lequel $S_1(t)$ représente en théorie le signal vocal reçu par le microphone et débarrassé des composantes en provenance des haut-parleurs, et $N(t)$ est un signal représentatif du bruit ambiant, obtenu par exemple en effectuant au préalable une estimation de ce bruit ambiant.

Le critère permettant d'établir s'il y a ou non une activité vocale détectée est mis en oeuvre en analysant, sur une période de temps prédéterminée, par exemple toutes les 10 millisecondes, la variation temporelle du rapport précédent. La valeur maximum de cette variation temporelle sur la période de temps considérée est alors comparée à un seuil de détection prédéfini. Plus précisément, en cas de variation importante du rapport signal-à-bruit précédent, la valeur maximum se trouvera être supérieure au seuil de détection, et les moyens 6 de détection d'activité vocale généreront le signal d'activation $C(t)$. A l'inverse, l'absence de commande vocale $V(t)$ se traduira par une faible variation du rapport signal-à-bruit qui, sous réserve d'un choix adéquat du seuil de détection, restera inférieure à ce seuil. Dans ce cas, il n'y a pas d'activation du dispositif de reconnaissance vocale.

L'inconvénient majeur des dispositifs d'annulation d'échos connus réside dans le fait que le dispositif d'estimation d'écho ne peut identifier que la réponse impulsionnelle linéaire des haut-parleurs, et non les composantes non-linéaires. Il en résulte que le signal $S_1(t)$ en sortie des moyens de soustraction 6 comporte non seulement, le cas échéant, la commande vocale $V(t)$, mais aussi une composante parasite appelée écho résiduel, due aux non-linéarités. Suivant la valeur du seuil de détection prédéterminé, l'écho résiduel peut être considéré comme étant un signal de commande vocale, ou au contraire faire passer inaperçue une commande vocale. La présence de cet écho résiduel provoque ainsi des cas de fausses alarmes ou de non détection préjudiciables pour le fonctionnement de la reconnaissance vocale.

Bien entendu, ce problème existe également pour l'activation de tout type de dispositif de traitement de la parole autre que la reconnaissance vocale, pour lequel il est obligatoire de pouvoir distinguer le signal vocal en provenance de l'utilisateur de tout autre signal (par exemple pour la gestion d'une communication en main-libre).

Afin de pallier l'inconvénient précédent, la présente invention a pour objet un procédé pour activer un dispositif de traitement de la parole dans un équipement de communication main-libre susceptible d'être utilisé en présence d'un dispositif comportant au moins un haut-parleur en fonctionnement, ledit équipement comportant un microphone pour recevoir un signal vocal et un dispositif d'estimation d'écho recevant un signal de sortie du haut-parleur et délivrant un signal d'écho estimé, le procédé comportant une étape de détection d'activité vocale en fonction d'une part, d'un premier signal résultant de la différence entre ledit signal vocal et ledit signal d'écho estimé, et d'autre part, d'un second signal distinct, caractérisé en ce que ledit second signal résulte d'une combinaison linéaire d'un signal représentatif du bruit ambiant et du signal d'écho estimé.

Avantageusement, ladite étape de détection consiste à générer un signal d'activation du dispositif de traitement de la parole en fonction de la variation temporelle du rapport entre ledit premier signal et ledit second signal.

Le second signal est obtenu par exemple en calculant la somme du signal représentatif du bruit ambiant et du signal d'écho estimé.

La présente invention a également pour objet un équipement de communication main-libre muni d'un dispositif de traitement de la parole et susceptible d'être utilisé en présence d'un dispositif comportant au moins un haut-parleur en fonctionnement, ledit équipement comportant en outre un microphone pour recevoir un signal vocal, un dispositif d'estimation d'écho recevant un signal de sortie du haut-parleur et délivrant un signal d'écho estimé, et des moyens de détection d'activité vocale générant un signal d'activation du dispositif de traitement de la parole en fonction d'une part, d'un premier signal résultant de la différence entre ledit signal vocal et ledit signal d'écho estimé, et d'autre part, d'un second signal distinct, caractérisé en ce qu'une entrée desdits moyens de détection est connectée à la sortie du dispositif annuleur d'écho, le second signal résultant d'une combinaison linéaire d'un signal représentatif du bruit ambiant et du signal d'écho estimé.

Un troisième objet de l'invention concerne un téléphone de radiocommunications, caractérisé en ce qu'il comporte un équipement de communication main-libre tel que défini précédemment.

L'invention, ainsi que les avantages qu'elle procure, seront mieux compris au vu de la description suivante, faite en référence aux figures annexées dans lesquelles :

- la figure 1, déjà commentée, illustre, sous forme de synoptique simplifié, le processus de reconnaissance vocale selon l'art antérieur pour un équipement fonctionnant en présence d'un auto-radio;
- la figure 2 illustre, sous forme de synoptique simplifié, les améliorations apportées selon l'invention.

Les éléments communs aux deux figures comportent les mêmes référence. On se situe pour les deux figures dans le cas non limitatif d'un téléphone mobile de radiocommunications utilisé dans un véhicule dans lequel un auto-radio est susceptible d'être en fonctionnement, le téléphone étant muni d'un dispositif de reconnaissance vocale. Comme cela a déjà été précisé, on peut généraliser aisément l'invention à tout type d'équipement de communication main-libre doté de tout type de dispositif de traitement de la parole activé suite à une détection d'activité vocale. Par ailleurs, tout autre type de dispositif électronique générateur d'un signal sonore perturbant pour la détection d'activité vocale peut être considéré.

Conformément à la figure 2, la détection d'activité vocale par les moyens 7 s'effectue, comme dans l'art antérieur, à partir d'un premier signal constitué par

$S_1(t)$, et selon l'invention, à partir d'un second signal distinct résultant d'une combinaison linéaire, par exemple une somme, de la sortie $S_2(t)$ du dispositif d'estimation d'écho 5, et du signal $N(t)$ représentatif du bruit ambiant, mesuré ou estimé au préalable. Afin de tenir compte du fait que les filtres adaptatifs utilisés pour chaque haut-parleur dans le dispositif d'estimation d'écho ne sont pas adaptés l'un par rapport à l'autre, le second signal peut être obtenu en effectuant une somme pondérée du signal $S_2(t)$ et du signal $N(t)$.

Dans une mise en oeuvre préférée de l'invention, les moyens 7 calculent le rapport signal-à-bruit entre le premier signal et le second signal distinct, à savoir le rapport suivant :

$$\frac{S_1(t)}{N(t) + S_2(t)}$$

Cela revient à dire que la détection d'activité vocale prend à présent en compte l'écho résiduel et le considère comme étant une composante de bruit. Le reste du traitement est en tout point identique avec celui des dispositifs connus.

La prise en compte de l'écho résiduel en tant que bruit dans la fonction rapport signal-à-bruit a pour conséquence que la fonction de détection d'activité vocale se comporte de façon identique, que l'auto-radio soit en marche ou non. Il en résulte qu'il n'existe plus de cas de fausse détection ou de non détection lorsque l'auto-radio est en fonctionnement.

## Revendications

1. Procédé pour activer un dispositif (3) de traitement de la parole dans un équipement de communication main-libre susceptible d'être utilisé en présence d'un dispositif comportant au moins un haut-parleur (1, 2) en fonctionnement, ledit équipement comportant un microphone (4) pour recevoir un signal vocal $V(t)+E_i(t)$ et un dispositif (5) d'estimation d'écho recevant un signal de sortie $HP_i(t)$ du haut-parleur (1, 2 ), le procédé comportant les étapes suivantes :

    a) délivrer un signal d'estimation d'écho $S_2(t)$ à partir du signal de sortie $HP_i(t)$ ;

    b) calculer un premier signal $S_1(t)$ en soustrayant le signal d'estimation d'écho $S_2(t)$ au signal vocal $V(t)+E_i(t)$ ;

    c) estimer ou mesurer un signal $N(t)$ représentatif du bruit ambiani ;

    d) générer un signal $C(t)$ d'activation du dispositif de traitement de la parole en fonction du premier signal $S_1(t)$ et d'un second signal distinct ;

**caractérisé en ce que** le second signal distinct résulte d'une combinaison linéaire du signal N(t) représentatif du bruit ambiant et du signal d'estimation d'écho $S_2(t)$.

2. Procédé selon la revendication 1, **caractérisé en ce que** le signal d'activation C(t) du dispositif de traitement de la parole (3) est généré en fonction de la variation temporelle du rapport entre ledit premier signal $S_1(t)$ et ledit second signal distinct.

3. Procédé selon l'une quelconque des revendications précédentes, **caractérisé en ce que** le second signal distinct est obtenu en calculant la somme du signal N(t) représentatif du bruit ambiant et du signal d'écho estimé $S_2(t)$.

4. Procédé selon l'une quelconque des revendications précédentes, **caractérisé en ce que** le signal N(t) représentatif du bruit ambiant résulte d'une estimation du bruit effectuée au préalable.

5. Procédé selon l'une quelconque des revendications précédentes, **caractérisé en ce que** le dispositif de traitement de la parole réalise une fonction de reconnaissance vocale.

6. Equipement de communication main-libre comportant muni d'un dispositif (3) de traitement de la parole et susceptible d'être utilisé en présence d'un dispositif comportant au moins un haut-parleur (1, 2) en fonctionnement, ledit équipement comportant en outre

   • un microphone (4) pour recevoir un signal vocal $V(t)+E_i(t)$,

   • un dispositif (5) d'estimation d'écho recevant un signal de sortie $HP_i(t)$ du haut-parleur et délivrant un signal d'écho estimé $S_2(t)$,

   • des moyens pour calculer un premier signal $S_1(t)$ en soustrayant le signal d'estimation d'écho $S_2(t)$ au signal vocal $V(t)+E_i(t)$ ;

   • des moyens pour estimer ou mesurer un signal N(t) représentatif du bruit ambiant ;

   • des moyens (7) de détection d'activité vocale pour générer un signal d'activation C(t) du dispositif de traitement de la parole (3) en fonction du premier signal $S_1(t)$ et d'un second signal distinct,

   **caractérisé en ce qu'**une entrée desdits moyens (7) de détection est connectée à la sortie du dispositif (5) d'estimation d'écho, le second signal distinct résultant d'une combinaison linéaire du signal N(t) représentatif du bruit ambiant et du signal d'écho estimé $S_2(t)$.

7. Equipement de communication main-libre selon la revendication 6, **caractérisé en ce que** le dispositif de traitement de la parole (3) est un dispositif de reconnaissance vocale.

8. Téléphone de radiocommunications, **caractérisé en ce qu'**il comporte un équipement selon l'une quelconque des revendications 6 ou 7.

## Patentansprüche

1. Verfahren zum Aktivieren einer Sprachverarbeitungsvorrichtung (3) in einem Freisprech-Kommunikationsgerät, das bei Vorhandensein einer Vorrichtung benutzt werden kann, welche mindestens einen in Betrieb befindlichen Lautsprecher (1, 2) beinhaltet, wobei das Gerät ein Mikrofon (4) zum Empfangen eines Sprachsignals $V(t)+E_i(t)$ sowie eine Vorrichtung (5) zur Echoabschätzung beinhaltet, welche ein Ausgangssignal $HP_i(t)$ des Lautsprechers (1, 2) empfängt, wobei das Verfahren die folgenden Schritte beinhaltet:

   a) Gewinnen eines Echoschätzsignals $S_2(t)$ aus dem Ausgangssignal $HP_i(t)$,
   b) Berechnen eines ersten Signals $S_1(t)$ durch Subtrahieren des Echoschätzsignals $S_2(t)$ vom Sprachsignals $V(t)+E_i(t)$,
   c) Abschätzen oder Messen eines Signals N(t), das die Störgeräusche aus der Umgebung repräsentiert und
   d) Erzeugen eines Signals C(t) zur Aktivierung der Sprachverarbeitungsvorrichtung in Abhängigkeit vom ersten Signal $S_1(t)$ und einem separaten zweiten Signal,

   **dadurch gekennzeichnet, daß** das separate zweite Signal aus einer linearen Kombination des für die Umgebungsgeräusche repräsentativen Signals N(t) mit dem Echoschätzsignal $S_2(t)$ resultiert.

2. Verfahren gemäß Anspruch 1, **dadurch gekennzeichnet, daß** das Signal C(t) zur Aktivierung der Sprachverarbeitungsvorrichtung (3) in Abhängigkeit von der zeitlichen Änderung des Verhältnisses zwischen dem besagten ersten Signal $S_1(t)$ und dem besagten separaten zweiten Signal erzeugt wird.

3. Verfahren gemäß einem oder beiden der vorgenannten Ansprüche, **dadurch gekennzeichnet,**

**daß** das separate zweite Signal durch Berechnen der Summe aus dem für die Umgebungsgeräusche repräsentativen Signal N(t) und dem Echoschätzsignal $S_2$(t) berechnet wird.

4. Verfahren gemäß einem oder mehreren der vorgenannten Ansprüche, **dadurch gekennzeichnet, daß** das für die Umgebungsgeräusche repräsentative Signal N(t) aus einer zuvor durchgeführten Abschätzung der Nebengeräusche resultiert.

5. Verfahren gemäß einem oder mehreren der vorgenannten Ansprüche, **dadurch gekennzeichnet, daß** das die Sprachverarbeitungsvorrichtung eine Spracherkennnungsfunktion ausführt.

6. Freisprech-Kommunikationsgerät, welche mit einer Vorrichtung zur Sprachverarbeitung (3) ausgestattet ist und bei Vorhandensein einer Vorrichtung benutzt werden kann, welche mindestens einen in Betrieb befindlichen Lautsprecher (1, 2) beinhaltet, wobei das besagte Gerät ferner

   • ein Mikrofon (4) zum Empfangen eines Sprachsignals V(t)+$E_i$(t),
   • eine Vorrichtung (5) zur Echoabschätzung, welche ein Ausgangssignal $HP_i$(t) des Lautsprechers empfängt und ein Echoschätzsignal $S_2$(t) liefert,
   • Mittel zum Berechnen eines ersten Signals $S_1$(t) durch Subtrahieren des Echoschätzsignals $S_2$(t) vom Sprachsignal V(t)+$E_i$(t),
   • Mittel zum Abschätzen oder Messen eines für die Umgebungsgeräusche repräsentativen Signals N(t) und
   • Mittel (7) zur Detektion von Sprachaktivität und zum Erzeugen eines Aktivierungssignals C(t) der Sprachverarbeitungsvorrichtung (3) in Abhängigkeit vom ersten Signal $S_1$(t) und von einem separaten zweiten Signal beinhaltet,

   **dadurch gekennzeichnet, daß** ein Eingang der besagten Detektionsmittel (7) mit dem Ausgang der Echoschätzvorrichtung (5) verbunden ist, wobei das separate zweite Signal aus einer linearen Kombination des für die Umgebungsgeräusche repräsentativen Signals N(t) und des Echoschätzsignals $S_2$(t) resultiert.

7. Freisprech-Kommunikationsgerät gemäß Anspruch 6, **dadurch gekennzeichnet, daß** die Sprachverarbeitungsvorrichtung (3) eine Spracherkennungsvorrichtung ist.

8. Funktelefon, **dadurch gekennzeichnet, daß** dieses ein Gerät gemäß einem oder beiden der Ansprüche 6 oder 7 beinhaltet.

**Claims**

1. A method of activating a speech processor device (3) in hands-free communications equipment that might be used in the presence of a device having at least one loudspeaker (1, 2) in operation, said equipment comprising a microphone (4) for receiving a voice signal V(t)+$E_1$(t) and an echo estimator device (5) receiving an output signal $HP_i$(t) from the loudspeaker (1, 2), the method comprising the following steps:

   a) delivering an estimated echo signal $S_2$(t) from the output signal $HP_i$(t);
   b) calculating a first signal $S_1$(t) by subtracting the estimated echo signal $S_2$(t) from the voice signal V(t)+$E_i$(t);
   c) estimating or measuring a signal N(t) representative of ambient noise; and
   d) generating a signal C(t) for activating the speech processor device as a function of the first signal $S_1$(t) and of a distinct second signal;

   the method being **characterized in that** the distinct second signal is the result of a linear combination of the estimated echo signal $S_2$(t) and of the signal N(t) representative of ambient noise.

2. A method according to claim 1, **characterized in that** the activation signal C(t) for activating the speech processor device (3) is generated as a function of time variation in the ratio between said first signal $S_1$(t) and said distinct second signal.

3. A method according to either preceding claim, **characterized in that** the distinct second signal is obtained by calculating the sum of the estimated echo signal $S_2$(t) plus the signal N(t) representative of ambient noise.

4. A method according to any preceding claim, **characterized in that** the signal N(t) representative of ambient noise is the result of a previously made estimate of noise.

5. A method according to any preceding claim, **characterized in that** the speech processor device implements a voice recognition function.

6. Hands-free communications equipment comprising a speech processor device (3) and liable to be used in the presence of a device having at least one loudspeaker (1, 2) in operation, said equipment further comprising:

   · a microphone (4) for receiving a voice signal V(t)+$E_i$(t);
   · an echo estimator device (5) receiving an out-

put signal $HP_i(t)$ from the loudspeaker and delivering an estimated echo signal $S_2(t)$;

- means for calculating a first signal $S_1(t)$ by subtracting the estimated echo signal $S_2(t)$ from the voice signal $V(t)+E_i(t)$;
- means for estimating or measuring a signal $N(t)$ representative of ambient noise; and
- means (7) for detecting voice activity to generate a signal $C(t)$ for activating the speech processor device (3) as a function of the first signal $S_1(t)$ and of a distinct second signal;

the equipment being **characterized in that** an input of said detector means (7) is connected to the output of the echo estimator device (5), the distinct second signal being the result of a linear combination between the estimated echo signal $S_2(t)$ and the signal $N(t)$ representative of ambient noise.

7. Hands-free communications equipment according to claim 6, **characterized in that** the speech processor device (3) is a voice recognition device.

8. Telecommunications equipment, **characterized in that** it includes equipment according to claim 6 or claim 7.

FIG.1

FIG.2